(19)

**Europäisches Patentamt**
**European Patent Office**
**Office européen des brevets**

(11) **EP 4 617 739 A1**

(12) **EUROPEAN PATENT APPLICATION**
published in accordance with Art. 153(4) EPC

(43) Date of publication:
**17.09.2025 Bulletin 2025/38**

(21) Application number: **24883560.5**

(22) Date of filing: **24.07.2024**

(51) International Patent Classification (IPC):
***G02B 6/036*** (2006.01)

(86) International application number:
**PCT/CN2024/107220**

(87) International publication number:
**WO 2025/161292 (07.08.2025 Gazette 2025/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2024 CN 202410136285**

(71) Applicants:
• **Zhongtian Technology Advanced Materials Co.,
  Ltd.
  Jiangsu 226010 (CN)**
• **Jiangsu Zhongtian Technology Co., Ltd.
  Nantong, Jiangsu 226463 (CN)**
• **Zhongtian Technology Fiber Optics Co., Ltd.
  Nantong, Jiangsu 226000 (CN)**

(72) Inventors:
• **WANG, Jianqing
  Nantong
  Jiangsu 226010 (CN)**

• **SHEN, Yichun
  Nantong
  Jiangsu 226010 (CN)**
• **QIN, Yu
  Nantong
  Jiangsu 226010 (CN)**
• **CHEN, Yali
  Nantong
  Jiangsu 226010 (CN)**
• **JIANG, Xinli
  Nantong
  Jiangsu 226010 (CN)**
• **XU, Xikai
  Nantong
  Jiangsu 226010 (CN)**

(74) Representative: **Range, Christopher William
Withers & Rogers LLP
2 London Bridge
London SE1 9RA (GB)**

(54) **LOW-LOSS BEND-RESISTANT SINGLE-MODE OPTICAL FIBER**

(57)   The present application provides a low-loss bending-resistant single-mode optical fiber, the low-loss bending-resistant single-mode optical fiber comprises a core layer, a first inner cladding layer, a second inner cladding layer, a depressed cladding layer and an outer cladding layer, which are sequentially arranged from the center to the outside. The outer radius of the first inner cladding layer is R2, the width R2-R1 of the first inner cladding layer is within a range of 1 $\mu$m to 4 $\mu$m, and a relative refractive index difference $\Delta 2$ between the first inner cladding layer and the outer cladding layer is within a range of -0.2% to 0%. The outer radius of the second inner cladding layer is R3, the width R3-R2 of the second inner cladding layer is within a range of 1 $\mu$m to 4 $\mu$m, and a relative refractive index difference $\Delta 3$ between the second inner cladding layer and the outer cladding layer is within a range of -0.1% to 0.1%. In the low-loss bending-resistant single-mode optical fiber of the present application, a first inner cladding layer and a second inner cladding layer that have different refractive index are arranged between the core layer and the depressed layer, and the zero-dispersion wavelength is shifted toward long wavelength by adjusting the value of the refractive index difference between the first inner cladding layer and the second inner cladding layer, and at the same time the zero-dispersion wavelength slope is decreased, thereby the optical fiber is compatible with the requirements of the G.652 dispersion standard.

EP 4 617 739 A1

Fig. 1

## Description

### I. Technical Field

The present application relates to the field of communication, in particular to a low-loss bending-resistant single-mode optical fiber.

### II. Background Art

G.657 optical fibers are a kind of optical fibers developed on the basis of G.652 optical fibers in order to achieve the goal of Fiber To The Home (FTTH). The most important property of G.657 optical fibers is its excellent bending resistance property. Under the principles of compatibility with G.652 optical fibers and minimum bending radius, G.657 optical fibers are categorized into four subtypes: G.657.A1, G.657.A2, G.657.B2 and G.657.B3 optical fibers, wherein, G.657A optical fibers (G.657.A1 and G.657.A2) are compatible with G.652 optical fibers, while G.657B optical fibers (G.657.B2 and G.657.B3) are not completely compatible with G.652 optical fibers. As super-high bending-resistant single-mode optical fibers, G657B3 optical fibers are designed for occasions where optical fiber communication is required under the condition of an extremely small bending radius, and have very low additional bending loss under the condition of 5 mm bending radius, so as to meet the installation and construction requirements under complex indoor and outdoor wiring conditions such as FTTH, eliminate the additional bending loss caused by corner turning, jumper fixing and high cable tension, etc., and ensure stable operation of the communication system. The latest ITU-T G.657 standard sets forth constraints on the dispersion-related property indexes (zero-dispersion wavelength and dispersion slope) of G.657.B3 optical fibers. Although the specified range of the dispersion-related property is still relatively loose compared with that of G.652 optical fibers, users put forward higher requirements for the property owing to the increasingly complex practical application environment of G.657.B3 optical fibers, it is required that the mode field diameter (MFD) of the new generation of G.657.B3 products should be as large as possible, and the dispersion indexes of the new generation of G.657.B3 products are already compatible with G.652 optical fibers. In the profile structure design of G.657.B3 optical fibers, it is necessary to comprehensively make a tradeoff among transmission loss, mode field diameter, cut-off wavelength, macrobend loss, dispersion and other parameters of the optical fibers according to the requirements in the standard. The profile generally includes a core layer, an inner cladding layer, a deep depressed layer and a pure silica outer cladding layer.

The profile structure of the core layer of an existing G.657.B3 optical fiber usually employs a stepped design, and there is an obvious sudden stress change between the core layer and the cladding layer, and the attenuation is relatively high; at the same time, in order to ensure the compatibility of the dispersion parameters and cable cutoff wavelength, etc. of the optical fiber with the G.652 standard, the design value of the width of the core layer is limited, and the mode field diameter is relatively small (usually smaller than 8.7 $\mu$m, typically 8.4 $\mu$m) and cannot be completely compatible with the mode field diameter specified in the G.652 standard. In addition, the profile of a G.657.B3 optical fiber usually has an inner cladding layer that has relatively large width (the typical width is 4.5-9 $\mu$m) between the core layer and the depressed layer, the main function of which is to reduce the effect of the depressed layer on MFD and dispersion property. When the profile of such a core rod is prepared through an in-tube process, if the width of the inner cladding layer is relatively large, the deposition cross-sectional area of other structural layers is reduced and the final rod size is limited. The Chinese Patent Application No. CN111807699A proposes a method for preparing a bending-resistant optical fiber, wherein, the core layer of the optical fiber has a typical stepped structure, and there is a great sudden stress change between the core layer and the cladding layer, leading to high attenuation and a small mode field diameter. In addition, the structural layers are prepared separately and then assembled together, resulting in a cumbersome preparation process and a long preparation period, which are not conducive to mass production. Moreover, the Chinese Patent Application No. CN103345017B proposes a design of a bending-insensitive single-mode optical fiber, the core layer of the optical fiber also has a typical stepped structure, and there is a great sudden stress change between the core layer and the cladding layer, resulting in high attenuation; in addition, in order to control the range of dispersion and bending loss value, the design value of the width of the inner cladding layer is large, which is not suitable for preparing the core rod by in-tube process.

In view of the above-mentioned shortcomings in the prior art, it is necessary for technicians in the art to consider how to make the optical fiber have the properties of relatively large mode field diameter (effective area), low transmission loss and low bending loss through reasonable optical fiber structure design on the basis of meeting the requirement for cut-off wavelength and dispersion.

### III. Contents of the Invention

In order to solve the problems in the prior art, the present application provides a low-loss bending-resistant single-mode optical fiber.

The present application provides a low-loss bending-resistant single-mode optical fiber, which comprises a core layer, a first inner cladding layer, a second inner cladding layer, a depressed cladding layer and an outer cladding layer, which are sequentially arranged from the center to the outside, wherein:

the outer radius of the first inner cladding layer is R2, the width R2-R1 of the first inner cladding layer is within a range of 1 $\mu$m to 4 $\mu$m, and a relative refractive index difference $\Delta2$ between the first inner cladding layer and the outer cladding layer is within a range of -0.2% to 0%;

the outer radius of the second inner cladding layer is R3, the width R3-R2 of the second inner cladding layer is within a range of 1 $\mu$m to 4 $\mu$m, and a relative refractive index difference $\Delta3$ between the second inner cladding layer and the outer cladding layer is within a range of -0.1% to 0.1%.

It can be understood that in the low-loss bending-resistant single-mode optical fiber of the present application, a first inner cladding layer and a second inner cladding layer that have different refractive index are arranged between the core layer and the depressed layer, and the zero-dispersion wavelength is shifted toward long wavelength by adjusting the refractive index difference between the first inner cladding layer and the second inner cladding layer, and at the same time the zero-dispersion wavelength slope is decreased, thereby the optical fiber is compatible with the requirements of the G.652 dispersion standard.

In one example, the radius R1 of the core layer is within a range of 4 $\mu$m to 6 $\mu$m, a relative refractive index $\Delta1$ between the top of the core layer and the outer cladding layer is within a range of 0.30% to 0.45%, and the refractive index gradually changes linearly from the center of the core layer to the boundary of the core layer.

It can be understood that in the low-loss bending-resistant single-mode optical fiber of the present application, the core layer refractive index profile employs a linearly gradient design; on one hand, the gradual change of physical properties and doping concentration can be achieved, and the interfacial stress difference between the core layer and the cladding layer can be reduced so as to reduce attenuation; on the other hand, under the condition that the refractive index difference of the core layer is maintained and the cut-off wavelength is smaller than or equal to 1,260 nm, a larger mode field diameter can be obtained by increasing the core diameter to meet the requirements of the G.657.B3 and G.652 standards.

In one example, a relative refractive index difference $\Delta4$ between the depressed cladding layer and the outer cladding layer is within a range of -0.6% to -0.3%.

In one example, the relative refractive index difference $\Delta3$ between the second inner cladding layer and the outer cladding layer is lower than the relative refractive index difference $\Delta2$ between the first inner cladding layer and the outer cladding layer.

In one example, the outer radius of the depressed cladding layer is R4, and the width R4-R3 of the depressed cladding layer is within a range of 6 $\mu$m to 10 $\mu$m.

In one example, the outer radius of the outer cladding layer is R5, the width R5-R4 of the outer cladding layer is within a range of 60 $\mu$m to 65 $\mu$m, and the material of the outer cladding layer is pure silica.

In one example, the core layer is a silica glass layer co-doped with Ge/F.

In one example, an application wavelength range of the low-loss bending-resistant single-mode optical fiber is 1,310 nm to 1,625 nm.

In one example, a mode field diameter of the low-loss bending-resistant single-mode optical fiber is 8.7 $\mu$m to 9.2 $\mu$m at 1,310 nm, and 9.2 $\mu$m to 10 $\mu$m at 1,550 nm.

In one example, an attenuation coefficient of the low-loss bending-resistant single-mode optical fiber is smaller than or equal to 0.350 dB/km at 1,310 nm, and smaller than or equal to 0.21 dB/km at 1,550 nm.

In one example, a zero-dispersion wavelength range of the low-loss bending-resistant single-mode optical fiber is 1,300 nm to 1,324 nm, and a dispersion slope of the low-loss bending-resistant single-mode optical fiber at the zero-dispersion wavelength is smaller than or equal to 0.092 ps/(nm$^2$*km).

It can be understood that under the condition that an inner cladding layer with a relatively narrow width is prepared by employing modified in-tube chemical vapor deposition (MCVD) or plasma chemical vapor deposition (PCVD) in-tube process, the preparation size of the core layer part is increased as far as possible, thereby the size of the finished preform rod and the yield of the single drawn filament are increased; in addition, the preparation of each structural layer by in-tube deposition can be completed in one cycle, and then the structural layers match pure silica sleeve for direct drawing. Therefore, the preparation process is relatively simple.

It can be understood that for the low-loss bending-resistant single-mode optical fiber of the present application, the principle of G.657.B3 optical fiber profile design is to achieve lowest possible transmission loss, on the premise that the cable cut-off wavelength is smaller than or equal to 1,260 nm and the bending loss is low with a small bending radius, so as to meet the dispersion value of G.652 standard, and provide a relatively large mode field diameter, so as to reduce the loss of splicing with conventional G.652 optical fiber.

**IV. Description of Drawings**

Fig. 1 is a schematic cross-sectional view of the optical fiber provided in an example of the present application.

Fig. 2 is a schematic diagram illustrating the refractive index distribution of the optical fiber provided in the example of the present application.

Fig. 3 is a schematic flow diagram of the preparation of the optical fiber provided in the example of the present application.

Fig. 4 is a schematic diagram of the measured profile structure of an existing G.657.B3 optical fiber.

Fig. 5 is a schematic diagram of the measured profile structure of the low-loss bending-resistant single-mode optical fiber designed in the present application.

Reference Numerals of Main Components

10 - low-loss bending-resistant single-mode optical fiber

11 - core layer

12 - first inner cladding layer

13 - second inner cladding layer

14 - depressed cladding layer

15 - outer cladding layer

The present application will be further detailed below in the following embodiments with reference to the above drawings.

**V. Embodiments**

The present application will be described more comprehensively in the follow description with reference to the accompanying drawings. The examples shown in the accompanying drawings are exemplary examples of the present application. However, the present application may be implemented in many different forms, and should not be construed as limited to the exemplary examples set forth herein. These exemplary examples are provided for the purpose of explaining the present application thoroughly and completely, and fully conveying the scope of the present application to those skilled in the art. Similar reference numerals represent identical or similar components. The terms used herein are for the purpose of describing specific exemplary examples only, and are not intended to limit the present application. As used herein, unless clearly indicated otherwise in the context, singular forms such as "a", "an" and "the" are intended to encompass plural forms as well. In addition, when used herein, the expressions "comprising" and/or "including" and/or "having" integers, steps, operations, components and/or groups do not exclude the presence or addition of one or more other features, regions, integers, steps, operations, components and/or groups. Unless otherwise defined, all terms (including technical and scientific terms) used herein have the same meanings as commonly understood by those having ordinary skills in the art to which the present application belongs. Moreover, unless explicitly defined otherwise herein, terms such as those defined in general dictionaries should be interpreted as having meanings consistent with their meanings in the related art and the content of the present application, and will not be interpreted as idealized or overly formal meanings. The following content will describe exemplary examples with reference to the accompanying drawings. It should be noted that the components depicted in the accompanying drawings are not necessarily shown to scale; identical or similar components will be given the same or similar reference numerals or similar technical terms.

Generally, the existing G.657.B3 core layer profile structure usually employs a stepped design, and there is an obvious sudden stress change between the core layer and the cladding layer, and the attenuation is relatively high; at the same time in order to ensure the compatibility of the dispersion parameters and cable cutoff wavelength, etc. of the optical fiber with the G.652 standard, the design value of the width of the core layer is limited, and the mode field diameter is relatively small (usually smaller than 8.7 $\mu$m, typically 8.4 $\mu$m) and cannot be completely compatible with the mode field diameter specified in the G.652 standard. In addition, G.657.B3 optical fiber profile usually has an inner cladding layer that has relatively large width (the typical width is 4.5-9 $\mu$m) between the core layer and the depressed layer, the main function of which is to reduce the effect of the depressed layer on MFD and dispersion property. When such a core rod profile is prepared by employing an in-tube process, the deposition sectional area of other structural layers is reduced and the final rod size is limited if the width of the inner cladding layer is relatively large. It is necessary for technicians in the art to consider how to make the optical fiber have the properties of relatively large mode field diameter (effective area), low transmission loss and low bending loss, by reasonable optical fiber structure design on the basis of the optical fiber meeting the requirement for cut-off wavelength and dispersion.

Accordingly, the present application provides a low-loss bending-resistant single-mode optical fiber, which comprises a core layer, a first inner cladding layer, a second inner cladding layer, a depressed cladding layer and an outer cladding layer, which are sequentially arranged from the center to the outside. The radius R1 of the core layer is within a range of 4 $\mu$m to 6 $\mu$m, a relative refractive index $\Delta$1 between the top of the core layer and the outer cladding layer is within a range of 0.30% to 0.45%, and the refractive index gradually changes linearly from the center of the core layer to the boundary of the core layer. It should be noted here that the relative refractive index can be calculated with an expression

$$\Delta n = \frac{n_1 - n_2}{n_2}$$

, where $n_1$ is the refractive index of the current layer, and $n_2$ is the refractive index of the pure silica outer cladding layer. The outer radius of the first inner cladding layer is R2, the width R2-R1 of the first inner cladding layer is within a range of 1 $\mu$m to 4 $\mu$m, and a relative refractive index difference $\Delta$2 between the first inner cladding layer and the outer cladding layer is within a range of -0.2% to 0%. The outer radius of the second inner cladding layer is R3, the width R3-R2 of the second inner cladding layer is within a range of 1 $\mu$m to 4 $\mu$m, and a relative refractive index difference $\Delta$3 between the second inner cladding layer and the outer cladding layer is within a range of -0.1% to 0.1%. A relative refractive index difference $\Delta$4 between the depressed cladding layer and the outer cladding layer is within a range of -0.6% to -0.3%. The material of the outer cladding layer is pure silica.

Therefore, with regard to the low-loss bending-resistant single-mode optical fiber in the present application, the core layer refractive index profile employs a linearly gradient design; on one hand, the gradual change of physical properties and doping concentration can be achieved, and the interfacial stress difference between the core layer and the cladding layer can be reduced so as to reduce attenuation; on the other hand, under the condition that the refractive index difference of the core layer is maintained and the cut-off wavelength is smaller than or equal to 1,260 nm, a relatively large mode field diameter can be obtained by increasing the core diameter, so as to meet the requirements of the G.657.B3 and G.652 standards. At the same time, in the low-loss bending-resistant single-mode optical fiber of the present application, a first inner cladding layer and a second inner cladding layer that have different refractive index are arranged between the core layer and the depressed layer, and the zero-dispersion wavelength is shifted toward long wavelength by adjusting the value of the refractive index difference between the first inner cladding layer and the second inner cladding layer, and at the same time the zero-dispersion wavelength slope is decreased, thereby the optical fiber is compatible with the requirements of the G.652 dispersion standard. With regard to the low-loss bending-resistant single-mode optical fiber of the present application, the principle of G.657.B3 optical fiber profile design is to achieve lowest possible transmission loss, on the premise that the cable cut-off wavelength is smaller than or equal to 1,260 nm and the bending loss is low with a small bending radius, so as to meet the dispersion value of G.652 standard, and to provide a relatively large mode field diameter, so as to reduce the loss of splicing with conventional G.652 optical fiber.

Those skilled in the art can readily understand that the modified in-tube chemical vapor deposition (MCVD) process and the plasma chemical vapor deposition (PCVD) process are two preformed rod manufacturing processes for optical fibers. The liquid raw materials employed in the MCVD process, such as $SiCl_4$ and $GeCl_4$, undergo an oxidation reaction at a high temperature to generate $SiO_2$, $B_2O_3$, $GeO_2$ and $P_2O_5$ micropowders, which are deposited on the inner wall of the quartz reaction tube. In the deposition process, it is necessary to accurately control the flow rate of the dopants, so as to obtain a designed refractive index distribution. This method is a stable and reliable method for manufacturing high-quality quartz glass optical fiber at present. The inner cladding layer and the core layer glass are deposited in a quartz cladding tube, and the entire system is in a fully enclosed ultra-purified state. The prepared preform rod has very high purity, and can be used to produce high-quality single-mode and multimode optical fibers. The heat source used in the PCVD process is microwave, and the reaction mechanism thereof is that the gas is activated by microwave to generate plasma to ionize the reaction gas, and the ionized reaction gas is in a state of charged ions. The thermal energy released when the charged ions are recombined melts the gaseous reactants, to form a thin transparent quartz glass deposition layer. The preparation of a core rod by PCVD also involves two basic steps, i.e., "deposition" and "rod formation". The PCVD process has high deposition efficiency, can accurately control the refractive index distribution, and can be used to manufacture optical fibers with a structure profile of complex refractive index (each layer can be deposited in thickness as small as 0.1 um, while tens to 100 um for MCVD). It has a low deposition rate and high requirements for the raw materials, and requires a liner tube.

The following content will describe exemplary examples with reference to the accompanying drawings. It should be noted that the components depicted in the accompanying drawings are not necessarily shown to scale; identical or similar components will be given the same or similar reference numerals or similar technical terms.

The specific embodiments of the present application will be further described below in detail with reference to the accompanying drawings.

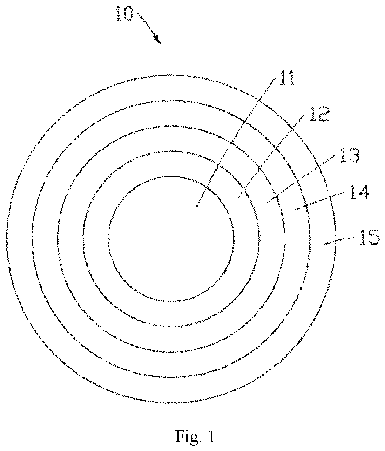

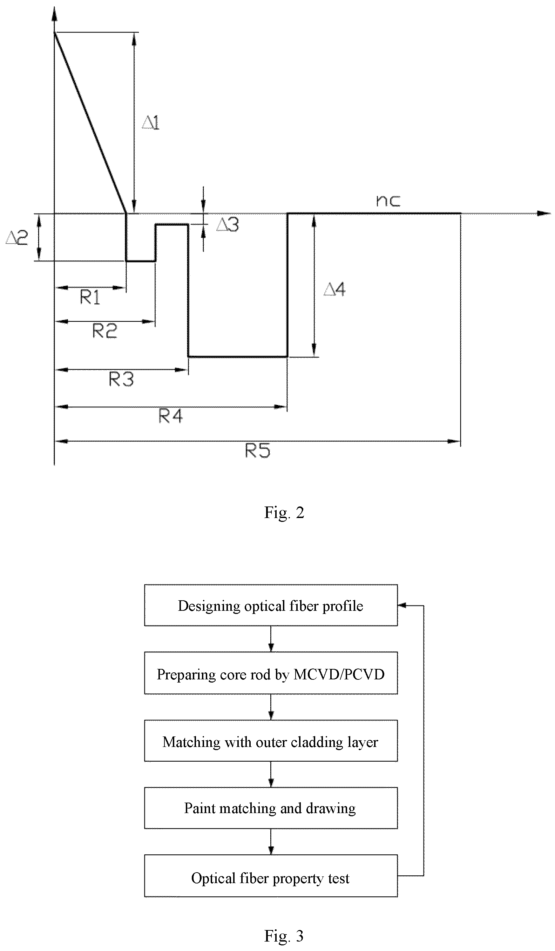

As shown in Figs. 1 and 2, the present application provides a low-loss bending-resistant single-mode optical fiber 10, the low-loss bending-resistant single-mode optical fiber 10 comprises a core layer 11, a first inner cladding layer 12, a second inner cladding layer 13, a depressed cladding layer 14 and an outer cladding layer 15, which are sequentially arranged from the center to the outside.

The radius R1 of the core layer 11 is within a range of 4 $\mu$m to 6 $\mu$m. The relative refractive index $\Delta$1 between the top of the core layer 11 and the outer cladding layer 15 is within a range of 0.30% to 0.45%, and the refractive index gradually changes linearly from the center of the core layer 11 to the boundary of the core layer 11.

The outer radius of the first inner cladding layer 12 is R2, and the width R2-R1 of the first inner cladding layer 12 is within a range of 1 $\mu$m to 4 $\mu$m. A relative refractive index difference $\Delta$2 between the first inner cladding layer 12 and the outer cladding layer 15 is within a range of -0.2% to 0%.

The outer radius of the second inner cladding layer 13 is R3, and the width R3-R2 of the second inner cladding layer 13 is within a range of 1 $\mu$m to 4 $\mu$m. A relative refractive index difference $\Delta$3 between the second inner cladding layer 13 and the outer cladding layer 15 is within a range of -0.1% to 0.1%.

The outer radius of the depressed cladding layer 14 is R4, and the width R4-R3 of the depressed cladding layer 14 is within a range of 6 $\mu$m to 10 $\mu$m. A relative refractive index difference $\Delta$4 between the depressed cladding layer 14 and the outer cladding layer 15 is within a range of -0.6% to -0.3%.

The outer radius of the outer cladding layer 15 is R5, and the width R5-R4 of the outer cladding layer 15 is within a range of 60 $\mu$m to 65 $\mu$m. The refractive index of the outer cladding layer 15 is nc, and the material of the outer cladding layer 15 is pure silica.

It can be understood that, with regard to the low-loss bending-resistant single-mode optical fiber 10 of the present application, the refractive index profile of the core layer 11 employs a linearly gradient design; on one hand, the gradual change of physical properties and doping concentration can be achieved, and the interfacial stress difference between the core layer and the cladding layer can be reduced so as to reduce attenuation; on the other hand, under the condition that the refractive index difference of the core layer 11 is maintained and the cut-off wavelength is smaller than or equal to 1,260 nm, a relatively large mode field diameter can be obtained by increasing the core diameter, so as to meet the requirements of the G.657.B3 and G.652 standards.

It can be understood that in the low-loss bending-resistant single-mode optical fiber 10 of the present application, a first inner cladding layer 12 and a second inner cladding layer 13 that have different refractive index are arranged between the core layer 11 and the depressed layer, and the zero-dispersion wavelength is shifted toward the long wavelength by adjusting the value of the refractive index difference between the first inner cladding layer 12 and the second inner cladding layer 13, and at the same time the zero-dispersion wavelength slope is decreased, thereby the optical fiber is compatible with the requirements of the G.652 dispersion standard.

In one example, the core layer 11 is a silica glass layer co-doped with Ge/F; the refractive index distribution of the core layer 11 can be changed by doping element F and element Ge.

In one example, the radius R1 of the core layer 11 may further be 4.1 $\mu$m, 4.2 $\mu$m, 4.3 $\mu$m, 4.4 $\mu$m, 4.5 $\mu$m, 4.6 $\mu$m, 4.7 $\mu$m, 4.8 $\mu$m, 4.9 $\mu$m, 5.1 $\mu$m, 5.2 $\mu$m, 5.3 $\mu$m, 5.4 $\mu$m, 5.5 $\mu$m, 5.6 $\mu$m, 5.7 $\mu$m, 5.8 $\mu$m, or 5.9 $\mu$m. The relative refractive index $\Delta$1 between the top of the core layer 11 and the outer cladding layer 15 may further be 0.31%, 0.32%, 0.33%, 0.34%, 0.35%, 0.36%, 0.37%, 0.38%, 0.39%, 0.41%, 0.42%, 0.43%, or 0.44%.

In one example, the width R2-R1 of the first inner cladding layer 12 may further be 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2.1 $\mu$m, 2.2 $\mu$m, 2.3 $\mu$m, 2.4 $\mu$m, 2.5 $\mu$m, 2.6 $\mu$m, 2.7 $\mu$m, 2.8 $\mu$m, 2.9 $\mu$m, 3.1 $\mu$m, 3.2 $\mu$m, 3.3 $\mu$m, 3.4 $\mu$m, 3.5 $\mu$m, 3.6 $\mu$m, 3.7 $\mu$m, 3.8 $\mu$m, or 3.9 $\mu$m. The relative refractive index difference $\Delta$2 between the first inner cladding layer 12 and the outer cladding layer 15 may further be -0.01%, -0.02%, -0.03%, -0.04%, -0.05%, -0.06%, -0.07%, -0.08%, -0.09%, -0.11%, -0.12%, -0.13%, -0.14%, -0.15%, -0.16%, -0.17%, -0.18%, or -0.19%; the refractive index distribution of the first inner cladding layer 12 can be changed by doping element F and element Ge.

In one example, the width R3-R2 of the second inner cladding layer 13 may further be 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2.1 $\mu$m, 2.2 $\mu$m, 2.3 $\mu$m, 2.4 $\mu$m, 2.5 $\mu$m, 2.6 $\mu$m, 2.7 $\mu$m, 2.8 $\mu$m, 2.9 $\mu$m, 3.1 $\mu$m, 3.2 $\mu$m, 3.3 $\mu$m, 3.4 $\mu$m, 3.5 $\mu$m, 3.6 $\mu$m, 3.7 $\mu$m, 3.8 $\mu$m, or 3.9 $\mu$m. The relative refractive index difference $\Delta$3 between the second inner cladding layer 13 and the outer cladding layer 15 may further be -0.01%, -0.02%, -0.03%, -0.04%, -0.05%, -0.06%, -0.07%, -0.08%, -0.09%, 0.01%, 0.02%, 0.03%, 0.04%, 0.05%, 0.06%, 0.07%, 0.08%, or 0.09%; the refractive index distribution of the second cladding layer 13 can be changed by doping element F and element Ge.

In one example, the relative refractive index difference $\Delta$3 between the second inner cladding layer 13 and the outer cladding layer 15 is lower than the relative refractive index difference Δ2 between the first inner cladding layer 12 and the outer cladding layer 15. That is, in consideration of the actual design, the values of the relative refractive index difference Δ2 between the first inner cladding layer 12 and the outer cladding layer 15 and the relative refractive index difference Δ3 between the second inner cladding layer 13 and the outer cladding layer 15 can be selected correspondingly, to meet the above design requirements.

In one example, the width R4-R3 of the depressed cladding layer 14 may further be 6.1 μm, 6.2 μm, 6.3 μm, 6.4 μm, 6.5 μm, 6.6 μm, 6.7 μm, 6.8 μm, 6.9 μm, 7.1 μm, 7.2 μm, 7.3 μm, 7.4 μm, 7.5 μm, 7.6 μm, 7.7 μm, 7.8 μm, 7.9 μm, 8.1 μm, 8.2 μm, 8.3 μm, 8.4 μm, 8.5 μm, 8.6 μm, 8.7 μm, 8.8 μm, 8.9 μm, 9.1 μm, 9.2 μm, 9.3 μm, 9.4 μm, 9.5 μm, 9.6 μm, 9.7 μm, 9.8 μm, or 9.9 μm. The relative refractive index difference Δ4 between the depressed cladding layer 14 and the outer cladding layer 15 may further be -0.31%, -0.32%, -0.33%, -0.34%, -0.35%, -0.36%, -0.37%, -0.38%, -0.39%, - 0.41%, -0.42%, -0.43%, -0.44%, -0.45%, -0.46%, -0.47%, -0.48%, -0.49%, -0.51%, -0.52%, -0.53%, -0.54%, -0.55%, -0.56%, -0.57%, -0.58%, or -0.59%; the refractive index distribution of the depressed cladding layer 14 can be changed by doping element F.

In one example, the width R5-R4 of the outer cladding layer 15 may further be 61.1μm, 61.2μm, 61.3μm, 61.4μm, 61.5μm, 61.6μm, 61.7μm, 61.8μm, 61.9μm, 62.1μm, 62.2μm, 62.3μm, 62.4μm, 62.5μm, 62.6μm, 62.7μm, 62.8μm, 62.9μm, 63.1μm, 63.2μm, 63.3μm, 63.4μm, 63.5μm, 63.6μm, 63.7μm, 63.8μm, 63.9μm, 64.1μm, 64.2μm, 64.3μm, 64.4μm, 64.5μm, 64.6μm, 64.7μm, 64.8μm, or 64.9μm, and a typical value of the width R5-R4 of the outer cladding layer 15 may be 62.5 μm.

In one example, an application wavelength range of the low-loss bending-resistant single-mode optical fiber 10 provided in the present application is 1,310 nm to 1,625 nm.

In one example, a mode field diameter of the low-loss bending-resistant single-mode optical fiber 10 provided in the present application is 8.7 μm to 9.2 μm at 1,310 nm, and 9.2 μm to 10 μm at 1,550 nm.

In one example, an attenuation coefficient of the low-loss bending-resistant single-mode optical fiber 10 provided by the present application is smaller than or equal to 0.350 dB/km at 1,310 nm, and smaller than or equal to 0.21 dB/km at 1,550 nm.

In one example, a zero-dispersion wavelength range of the low-loss bending-resistant single-mode optical fiber 10 provided by the present application is 1,300 nm to 1,324 nm, and a dispersion slope of the low-loss bending-resistant single-mode optical fiber 10 provided by the present application at the zero-dispersion wavelength is smaller than or equal to 0.092 ps/(nm$^2$*km).

In one example, the core layer 11, the first inner cladding layer 12, the second inner cladding layer 13 and the depressed cladding layer 14 are prepared by employing modified in-tube chemical vapor deposition (MCVD) or plasma chemical vapor deposition (PCVD) process.

It can be understood that under the condition that an inner cladding layer with relatively narrow width is prepared by employing modified in-tube chemical vapor deposition (MCVD) process or plasma chemical vapor deposition (PCVD) in-tube process, the preparation size of the core layer 11 part is increased as far as possible, thereby the size of the finished preform rod and the yield of the single drawn filament are increased; in addition, the preparation of each structural layer via deposition by in-tube process can be completed in one cycle, and the structural layers can match with pure silica outer sleeve for direct drawing, and the preparation process is relatively simple.

It can be understood that, with regard to the low-loss bending-resistant single-mode optical fiber 10 of the present application, the principle of the G.657.B3 optical fiber profile design is to achieve lowest transmission loss, on the premise that the cable cut-off wavelength is smaller than or equal to 1,260 nm and the bending loss is low with a small bending radius, to meet the dispersion value of G.652 standard, and to provide a relatively large mode field diameter, so as to reduce the loss of splicing with conventional G.652 optical fiber.

The various property indexes of the low-loss bending-resistant single-mode optical fiber prepared in the present application can meet or surpass the industrial standard G.657.B3, and has a relatively high MFD (MFD@1,300nm~8.9) and dispersion property compatible with G.652 optical fibers. The property test typical values of the low-loss bending-resistant single-mode optical fiber are shown in Table 1:

Table 1 - Property Test Typical Values of the Low-Loss Bending-Resistant Single-Mode Optical Fiber of the Present Application

| Item | Unit | ITU-G657B3 requirement | Tested typical value |
|---|---|---|---|
| Mode field diameter @ 1,310 nm | μm | (8.6~9.5)±0.4 | 9.0 |
| Cable cut-off wavelength | nm | ≤1260 | 1,230 |
| Zero-dispersion wavelength | nm | 1,250-1,350 | 1,310 |
| Zero-dispersion wavelength slope | Ps/(nm$^2$*km) | ≤0.11 | 0.089 |

(continued)

| Item | Unit | ITU-G657B3 requirement | Tested typical value |
|---|---|---|---|
| R5-1 @1,550nm | dB | ≤0.15 | 0.040 |
| R7.5-1 @1,550nm | dB | ≤0.08 | 0.020 |
| R10-1 @1,550nm | dB | ≤0.03 | 0.010 |

The various property indexes of the low-loss bending-resistant single-mode optical fiber described in the previous example are as follows: attenuation @ 1,310 nm: ≤ 0.35 dB/km, attenuation @ 1,550 nm: ≤ 0.21 dB/km; mode field diameter @ 1,310 nm: ~8.6 $\mu$m, mode field diameter @ 1,550nm: -9.6 $\mu$m; optical cable cut-off wavelength: ≤ 1,260 nm; macrobend loss for 10 mm radius - 1 turn at 1,550 nm: ≤ 0.03 dB, macrobend loss for 7.5 mm radius - 1 turn: ≤ 0.08 dB, macrobend loss for 5 mm radius - 1 turn: ≤0.15 dB.

It can be understood that the bending loss of the optical fiber is closely related to the refractive index of the core layer and the depth and width of the depressed layer. In order to achieve low bending loss with a small bending radius of G657.B3, it is necessary to design a relatively high refractive index for the core layer, and at the same time arrange a relatively deep and relatively wide depressed layer near the core layer. The core layer is usually doped with $GeO_2$ to improve the refractive index, and the absorption loss and Rayleigh scattering caused by $GeO_2$ doping are the main reasons for the high attenuation of the optical fiber. Therefore, it is necessary to find a suitable content of $GeO_2$ in the core layer in a certain range during the preparation of the core rod. Under the condition that the large mode field diameter of G.657.B3 is satisfied, if the core layer employs the traditional stepped design, increasing refractive index will easily result in the cut-off wavelength of the optical cable exceeding the standard of 1,260 nm; if the gradient core layer design is employed, under the condition of the same refractive index and the same cut-off wavelength, the boundary point of the core layer may be further widened to achieve a larger mode field diameter. If the depressed layer is too deep or too wide, cable cut-off wavelength may be easily greater than 1,260 nm and exceed the standard. In addition, the depressed layer being close to the core layer will cause reduced mode field diameter, reduced zero-dispersion wavelength, and increased zero-dispersion wavelength slope. Therefore, in the traditional design, there is an inner cladding layer with a great radius (the typical width is 4.5-9 $\mu$m) between the depressed layer and the core layer, which plays a role in adjusting the dispersion and the mode field diameter.

It can be understood that when a relatively deep and relatively wide depressed structure is employed, a high effective relative refractive index difference ($\Delta$n) is obtained under the condition that the refractive index difference and the Ge content of the core layer are reduced, and low bending loss can be realized, and the attenuation of the optical fiber can be reduced as well, because the amount of Ge doped in the core layer is reduced. The existence of the depressed layer has a significant effect on the dispersion parameter and the mode field diameter of the optical fiber. Therefore, in a G.657.B3 optical fiber, the effect of the depression on the key properties (mode field diameter and dispersion) of the optical fiber can be reduced by introducing an inner cladding layer between the core layer and the depression. Finally, reasonable optical parameters can be obtained by adjusting the refractive index distribution of each structural layer.

Implementation steps:

As shown in Fig. 3, generally, the preparation and production process of the low-loss bending-resistant single-mode optical fiber of the present application comprises following steps: designing the optical fiber profile (the design parameters are as described in the above examples); preparing the core rod by MCVD/PCVD; matching with the outer cladding layer; paint matching and drawing; optical fiber property test.

Specifically, a preform core rod is prepared by employing modified in-tube chemical vapor deposition (MCVD) process or plasma chemical vapor deposition (PCVD) process, and the core rod comprises: a core layer, a first inner cladding layer, a second inner cladding layer, a depressed layer, and a partially pure silica outer cladding layer (composed of a pure silica quartz tube). The pure silica quartz tube is used as a deposition substrate tube, $SiCl_4$ and $O_2$ are used as raw materials for $SiO_2$, $SiF_4$, $SF_6$, $C_2F_6$ or $CF_4$ is used as raw materials for fluorine-doping, and $GeCl_4$ is used as a raw material for Ge-doping; a reciprocating hydrogen-oxygen blowtorch or plasma is used as a heat source, and a depressed layer, a second inner cladding layer, a first inner cladding layer, and a core layer are sequentially obtained through deposition on the inner surface of the pure silica quartz substrate tube by controlling the concentrations of the doped elements in the tube; then, the deposition tube is melted and shrunk to an appropriate inner diameter under high temperature, $SF_6$ or $C_2F_6$ and $O_2$ are charged before the inner diameter is reduced to zero and the impurities adhered to the inner surface are etched and removed under the heating by a hydrogen-oxygen blowtorch or a graphite furnace, and finally the core rod is melted and shrunk to a solid core rod at the high temperature. A pure quartz sleeve is employed as an outer sleeve (the outer cladding layer) or with the help of an OVD process for pure matching drawing, and then optical fiber is obtained by drawing at high temperature.

Relevant parameters are adjusted according to the above implementation steps, thus corresponding Examples 1 to 4 and Comparative Examples 1 and 2 are obtained. In the Comparative Example 1 the design of a single inner cladding layer is adopted (a second inner cladding layer is not arranged), and the refractive index of the core layer of the Comparative Example 2 does not employ a linearly gradient design; the various profile structures and test results of corresponding optical parameters of the Examples 1 to 4 and the Comparative Examples 1 and 2 are shown in Tables 2 and 3.

Table 2 - Optical Fiber Parameters of Different Structural Designs

| Example | R1/μm | Δ1/% | R2/μm | Δ2/% | R3/μm | Δ3/% | R4/μm | Δ4/% |
|---|---|---|---|---|---|---|---|---|
| Example 1 | 4.6 | 0.41 | 6.3 | -0.15 | 8.0 | 0.05 | 16.1 | -0.48 |
| Example 2 | 4.8 | 0.41 | 6.2 | -0.13 | 7.9 | 0.01 | 16.2 | -0.48 |
| Example 3 | 4.7 | 0.40 | 6.3 | -0.10 | 8.2 | -0.05 | 15.9 | -0.47 |
| Comparative Example 1 (with a single inner cladding layer) | 4.7 | 0.42 | 12.5 | -0.09 | \ | \ | 18.6 | -0.46 |
| Example 4 | 4.8 | 0.45 | 6.2 | -0.16 | 8.4 | -0.03 | 16.3 | -0.47 |
| Comparative Example 2 | 4.3 | 0.40 | 6.1 | -0.14 | 8.0 | -0.05 | 16.5 | -0.46 |

Table 3 - Tested Property of Optical Fibers with Different Structural Parameters

| Example | MFD @ 1,310nm/μm | MFD @ 1,550nm/μm | Cable cut-off wavelength /nm | Attenuation coefficient @ 1,310 nm/(dB/km) | Attenuation coefficient @ 1,550 nm/(dB/km) | Zero-dispersion wavelength /nm | Zero-dispersion wavelength slope ps (nm²*km) | Macrobend loss (R10-1 @ 1,550nm)/dB | Macrobend loss (R7.5-1 @ 1,550nm)/dB | Macrobend loss (R5-1 @ 1,550nm)/dB |
|---|---|---|---|---|---|---|---|---|---|---|
| Example 1 | 9.0 | 10.2 | 1226 | 0.305 | 0.179 | 1318 | 0.087 | 0.008 | 0.013 | 0.033 |
| Example 2 | 9.2 | 10.5 | 1229 | 0.306 | 0.181 | 1312 | 0.089 | 0.010 | 0.018 | 0.040 |
| Example 3 | 9.1 | 10.3 | 1235 | 0.300 | 0.182 | 1301 | 0.092 | 0.006 | 0.015 | 0.028 |
| Comparative Example 1 (with a single inner cladding layer) | 8.8 | 10.1 | 1245 | 0.302 | 0.180 | 1313 | 0.089 | 0.015 | 0.028 | 0.052 |
| Example 4 | 8.8 | 10.2 | 1258 | 0.319 | 0.186 | 1309 | 0.091 | 0.004 | 0.008 | 0.019 |
| Comparative Example 2 | 8.3 | 9.6 | 1255 | 0.314 | 0.188 | 1315 | 0.090 | 0.005 | 0.011 | 0.018 |

From Examples 1 to 4 and Comparative Examples 1 and 2, it can be seen that the refractive index difference between the first inner cladding layer and the second inner cladding layer has an obvious effect on the zero-dispersion wavelength and the zero-dispersion wavelength slope. Under the condition of the same width of the inner cladding layer, if the refractive index difference between them is increased, the zero-dispersion wavelength can be controlled to shift toward a long wavelength, at the same time the zero-dispersion wavelength slope can be decreased, and the dispersion parameters meet the G.652 standard. If the refractive index difference between them is close to zero or is zero, the dispersion parameter is easy to be out of the standard under the condition that the width of the inner cladding layer remains unchanged; consequently, it is necessary to greatly increase the width of the inner cladding layer to adjust the dispersion parameters to the range specified in the standard. It can be seen from Example 1 and Example 4 that the bending loss is improved after the refractive index of the core layer is increased, but the cable cut-off wavelength is easy to be too large and out of the standard, and the Rayleigh scattering loss is also obviously increased at the same time owing to the increased Ge concentration. It can be seen from Example 1 and Comparative Example 2 (the core layer employs a stepped design), under the condition of the same height of the core layer, in order to control the cable cut-off wavelength to be smaller than or equal to 1,260 nm, the design value of the width of the stepped core layer is reduced, and the MFD is obviously reduced, close to the lower limit specified in the standard; in addition, the attenuation is increased obviously, owing to the obvious sudden stress change between the core layer and the cladding layer.

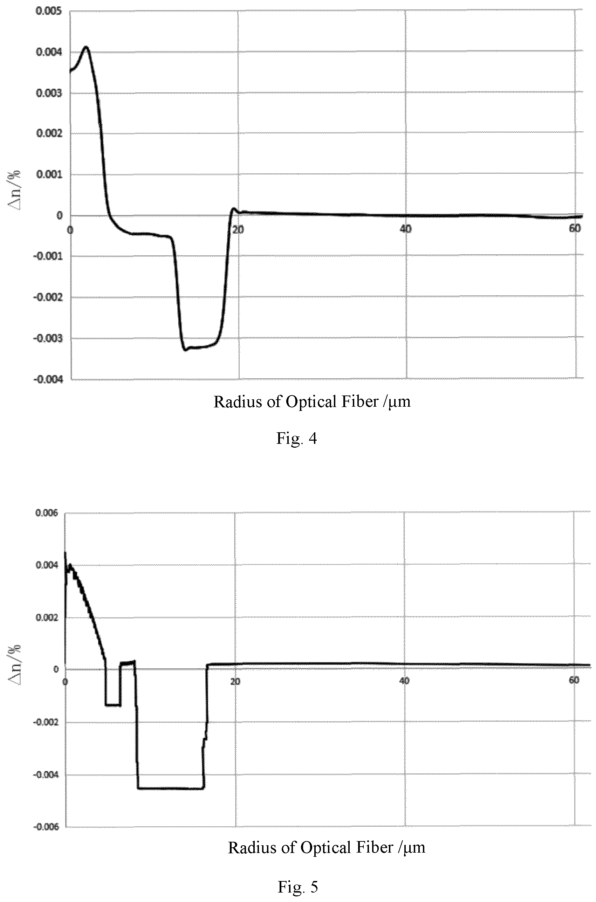

Furthermore, please refer to Figs. 4 and 5. Fig. 4 is a schematic diagram of the measured profile structure of an existing G.657.B3 optical fiber, and Fig. 5 is a schematic diagram of the measured profile structure of the low-loss bending-resistant single-mode optical fiber (G.657.B3 optical fiber) designed in the present application.

It can be understood that the low-loss bending-resistant single-mode optical fiber designed by the present application employs a linearly gradient design of the core layer, thus, on one hand, the gradual change of physical properties and doping concentration is achieved, the interfacial stress difference between the core layer and the cladding layer is reduced to reduce attenuation, and at the same time a relatively large mode field diameter is obtained by increasing the core diamete. As a result, a novel method for designing a single-mode optical fiber that is compatible with G.652 and G.657.B3 and has low attenuation, large effective area and low bending loss property.

It can be understood that, in the design of the present application, a first inner cladding layer and a second inner cladding layer that have different refractive index are arranged between the core layer and the depressed layer; thus, under a condition that a relatively narrow inner cladding layer is prepared by employing in-tube process, the preparation size of the core layer part is increased as far as possible, thereby the size of the finished preform rod and the yield of single drawn filament are increased, and the preparation process is relatively simple and suitable for mass production.

In the above, the specific embodiments of the present application are described with reference to the accompanying drawings. However, those skilled in the art can readily understand that various modifications and substitutions can be made to the specific embodiments of the present application, without deviating from the spirit and scope of the present application. These modifications and substitutions shall be deemed as falling in the scope defined by the present application.

## Claims

1.    A low-loss bending-resistant single-mode optical fiber, **characterized in that**, the low-loss bending-resistant single-mode optical fiber comprises a core layer, a first inner cladding layer, a second inner cladding layer, a depressed cladding layer and an outer cladding layer, which are sequentially arranged from the center to the outside, wherein:

the outer radius of the first inner cladding layer is R2, the width R2-R1 of the first inner cladding layer is within a range of 1 $\mu$m to 4 $\mu$m, and a relative refractive index difference $\Delta 2$ between the first inner cladding layer and the outer cladding layer is within a range of -0.2% to 0%;
the outer radius of the second inner cladding layer is R3, the width R3-R2 of the second inner cladding layer is within a range of 1 $\mu$m to 4 $\mu$m, and a relative refractive index difference $\Delta 3$ between the second inner cladding layer and the outer cladding layer is within a range of -0.1% to 0.1%.

2.    The low-loss bending-resistant single-mode optical fiber according to claim 1, **characterized in that**, the radius R1 of the core layer is within a range of 4 $\mu$m to 6 $\mu$m, a relative refractive index $\Delta 1$ between the top of the core layer and the outer cladding layer is within a range of 0.30% to 0.45%, and the refractive index gradually changes linearly from the center of the core layer to the boundary of the core layer.

3.    The low-loss bending-resistant single-mode optical fiber according to claim 1, **characterized in that**, a relative refractive index difference $\Delta 4$ between the depressed cladding layer and the outer cladding layer is within a range of -0.6% to -0.3%.

4.    The low-loss bending-resistant single-mode optical fiber according to claim 1, **characterized in that**, the relative refractive index difference $\Delta 3$ between the second inner cladding layer and the outer cladding layer is lower than the relative refractive index difference $\Delta 2$ between the first inner cladding layer and the outer cladding layer.

5.    The low-loss bending-resistant single-mode optical fiber according to claim 1, **characterized in that**, the outer radius of the depressed cladding layer is R4, and the width R4-R3 of the depressed cladding layer is within a range of 6 $\mu$m to 10 $\mu$m.

6. The low-loss bending-resistant single-mode optical fiber according to claim 1, **characterized in that**, the outer radius of the outer cladding layer is R5, the width R5-R4 of the outer cladding layer is within a range of 60 $\mu$m to 65 $\mu$m, and the material of the outer cladding layer is pure silica.

7. The low-loss bending-resistant single-mode optical fiber according to claim 1, **characterized in that**, the core layer is a silica glass layer co-doped with Ge/F.

8. The low-loss bending-resistant single-mode optical fiber according to claim 1, **characterized in that**, an application wavelength range of the low-loss bending-resistant single-mode optical fiber is 1,310 nm to 1,625 nm.

9. The low-loss bending-resistant single-mode optical fiber according to claim 1, **characterized in that**, a mode field diameter of the low-loss bending-resistant single-mode optical fiber is 8.7 $\mu$m to 9.2 $\mu$m at 1,310 nm, and 9.2 $\mu$m to 10 $\mu$m at 1,550 nm.

10. The low-loss bending-resistant single-mode optical fiber according to claim 1, **characterized in that**, an attenuation coefficient of the low-loss bending-resistant single-mode optical fiber is smaller than or equal to 0.350 dB/km at 1,310 nm, and smaller than or equal to 0.21 dB/km at 1,550 nm; a zero-dispersion wavelength range of the low-loss bending-resistant single-mode optical fiber is 1,300 nm to 1,324 nm, and a dispersion slope of the low-loss bending-resistant single-mode optical fiber at the zero-dispersion wavelength is smaller than or equal to 0.092 ps/(nm$^2$*km).

Fig. 1

Fig. 2

Fig. 3

Radius of Optical Fiber /μm

Fig. 4

Radius of Optical Fiber /μm

Fig. 5

## INTERNATIONAL SEARCH REPORT

| International application No. |
| --- |
| **PCT/CN2024/107220** |

**A. CLASSIFICATION OF SUBJECT MATTER**

G02B6/036(2006.01)i

According to International Patent Classification (IPC) or to both national classification and IPC

**B. FIELDS SEARCHED**

Minimum documentation searched (classification system followed by classification symbols)

IPC:G02B

Documentation searched other than minimum documentation to the extent that such documents are included in the fields searched

Electronic data base consulted during the international search (name of data base and, where practicable, search terms used)

CNABS, CNTXT, CNKI, VEN, ENTXT, USTXT, WPABS, ENTXTC: 包层, 第二, 外, 凹陷, 下陷, 折射率, 差, 直线, 线性, 斜率, 三角形, 色散, cladding, second, outer, concave, downward?, refractive 1d index, difference, line+, triangle, dispersion

**C. DOCUMENTS CONSIDERED TO BE RELEVANT**

| Category* | Citation of document, with indication, where appropriate, of the relevant passages | Relevant to claim No. |
| --- | --- | --- |
| X | CN 104316994 A (YANGTZE OPTICAL FIBRE AND CABLE JOINT STOCK LIMITED COMPANY) 28 January 2015 (2015-01-28) description, paragraphs 0009-0035, and figures 1-5 | 1, 3, 5-10 |
| Y | CN 104316994 A (YANGTZE OPTICAL FIBRE AND CABLE JOINT STOCK LIMITED COMPANY) 28 January 2015 (2015-01-28) description, paragraphs 0009-0035, and figures 1-5 | 2, 4 |
| Y | CN 114994830 A (JIANGSU HENGTONG PHOTOCONDUCTIVE NEW MATERIALS CO., LTD. et al.) 02 September 2022 (2022-09-02) description, paragraphs 0041-0061, and figures 1-2 | 2 |
| Y | CN 103380389 A (PRYSMIAN S.P.A.) 30 October 2013 (2013-10-30) description, paragraphs 0035-0074, and figures 1-5 | 4 |
| Y | CN 1211739 A (SAMSUNG ELECTRONICS CO., LTD.) 24 March 1999 (1999-03-24) description, page 3, 2nd-to-last paragraph to page 5, and figures 1-5 | 2 |
| PX | CN 117826319 A (ZHONGTIAN TECHNOLOGY PRECISION MATERIALS CO., LTD. et al.) 05 April 2024 (2024-04-05) description, paragraphs 0037-0083, and figures 1-5 | 1-10 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 October 2024** | **09 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/107220** |

### C. DOCUMENTS CONSIDERED TO BE RELEVANT

| Category* | Citation of document, with indication, where appropriate, of the relevant passages | Relevant to claim No. |
| --- | --- | --- |
| A | CN 1942793 A (LS CABLE LTD.) 04 April 2007 (2007-04-04)<br>description, page 6 line 8-page 13, and figures 1-14d | 1-10 |
| A | KR 19990062552 A (SAMSUNG ELECTRONICS CO., LTD.) 26 July 1999 (1999-07-26)<br>description, paragraphs 0012-0028, and figures 1-10 | 1-10 |

Form PCT/ISA/210 (second sheet) (July 2022)

**INTERNATIONAL SEARCH REPORT**
**Information on patent family members**

International application No.

**PCT/CN2024/107220**

| Patent document cited in search report | | | Publication date (day/month/year) | Patent family member(s) | | | Publication date (day/month/year) |
|---|---|---|---|---|---|---|---|
| CN | 104316994 | A | 28 January 2015 | None | | | |
| CN | 114994830 | A | 02 September 2022 | None | | | |
| CN | 103380389 | A | 30 October 2013 | WO | 2012084050 | A1 | 28 June 2012 |
| | | | | DK | 2656127 | T3 | 20 May 2019 |
| | | | | EP | 2656127 | A1 | 30 October 2013 |
| | | | | EP | 2656127 | B1 | 27 February 2019 |
| | | | | ES | 2727331 | T3 | 15 October 2019 |
| | | | | US | 2013272670 | A1 | 17 October 2013 |
| | | | | US | 9279935 | B2 | 08 March 2016 |
| CN | 1211739 | A | 24 March 1999 | KR | 19990029630 | A | 26 April 1999 |
| | | | | KR | 100433297 | B1 | 05 August 2005 |
| | | | | KR | 19990025725 | A | 06 April 1999 |
| | | | | US | 6307993 | B1 | 23 October 2001 |
| CN | 117826319 | A | 05 April 2024 | None | | | |
| CN | 1942793 | A | 04 April 2007 | WO | 2005106544 | A1 | 10 November 2005 |
| KR | 19990062552 | A | 26 July 1999 | KR | 100330594 | B1 | 27 August 2002 |
| | | | | AR | 014242 | A1 | 07 February 2001 |

Form PCT/ISA/210 (patent family annex) (July 2022)

**EP 4 617 739 A1**

**Patent documents cited in the description**

- CN 111807699 A
- CN 103345017 B